# EUROPEAN PATENT APPLICATION

(11) **EP 4 823 186 A1**
(43) Date of publication of application: **14.10.2026**
(21) Application number: 26161401.0
(22) Date of filing: 27.02.2026
(51) Int. Cl.: H04W 48/18, H04W 84/18, H04W 88/08

(54) **AD HOC RADIO BASE STATION, METHOD AND COMPUTER PROGRAM**

(30) Priority: 09.04.2025 US 202563785964 P; 26.08.2025 US 202563870363 P
(71) Applicant: EXFO Oy, 90590 Oulu (FI)
(72) Inventor: Yrttiaho, Sakari, 90590 Oulu (FI); Kumpula, Juha, 90590 Oulu (FI); Akselin, Marko Tapani, 90590 Oulu (FI); Toppinen, Hannu, 90590 Oulu (FI); Lehtikangas, Juha Olavi, 90590 Oulu (FI)
(74) Representative: Kolster Oy Ab

(57) **Abstract**

An ad hoc radio base station, a method, and a computer program are presented. The base station is configured to set up (400) an ad hoc cell; set up a radio connection (402) with a terminal device in the cell; transmit (900) to the terminal device a message, the message comprising a tracking area code and initiating a timer; upon expiration of the timer, transmit (902) to the terminal device a subsequent message comprising a tracking area code, and reinitiate the timer; repeating the transmission upon each expiration of the timer. The tracking area code used in the transmitted messages changes after a predetermined number of consecutive transmissions, the predetermined number being at least one.

## Description

### FIELD

Various embodiments relate to an ad hoc radio base station, and a method for gathering data for locating a terminal device served by the ad hoc base station.

### BACKGROUND

An ad hoc radio base station implements an ad hoc (created for a particular purpose as necessary) cell to operate in parallel with existing (usually permanent) cells. The ad hoc radio base station may be used in a surveillance operation, for example. As pre-planning of the ad hoc cell may not be possible, and co-operation with existing cellular radio network infrastructure may be minimal, operation of the ad hoc radio base station needs to be sophisticated to enable flexible and easy operation.

The ad hoc radio base station may be regarded as a "fake" base station used to measure a target terminal device. Usually, the ad hoc base station sets up a cell. The target terminal device is attracted to make a cell reselection to the ad hoc cell and a connection is set up between the ad hoc base station and the target terminal device so that measurements related to the terminal device may be performed. For example, the location or direction where the target terminal device may be determined based on the measurements. This is often referred to as Direction Finding (DF). This is performed via communication with the target terminal device using the ad hoc base station which needs to continuously maintain and receive communications from the terminal device to be able to locate the position of the target terminal device in real time.

### BRIEF DESCRIPTION

According to an aspect, there is provided an ad hoc radio base station, comprising at least one processor, and at least one memory storing instructions that, when executed by the at least one processor, cause the ad hoc radio base station at least to: set up an ad hoc cell; set up a radio connection with a terminal device in the ad hoc cell; transmit to the terminal device a message, the message comprising a tracking area code and initiate a timer; upon expiration of the timer, transmit to the terminal device a subsequent message comprising a tracking area code, and reinitiate the timer; repeat the transmission upon each expiration of the timer to keep the terminal device connected and transmitting to the ad hoc base station, wherein the tracking area code used in the transmitted messages changes after a predetermined number of consecutive transmissions, the predetermined number being at least one, and receive, in response to one or more of the transmitted messages, one or more registration requests from the terminal device, each registration request corresponding to a respective transmitted message.

According to an aspect, there is provided a method for an ad hoc base station comprising: setting up an ad hoc cell; setting up a radio connection with a terminal device in the ad hoc cell; transmitting to the terminal device a message, the message comprising a tracking area code, and initiating a timer; upon expiration of the timer, transmitting to the terminal device a subsequent message comprising a tracking area code, and reinitiating the timer; repeating the transmission upon each expiration of the timer to keep the terminal device connected and transmitting to the ad hoc base station, wherein the tracking area code used in the transmitted messages changes after a predetermined number of consecutive transmissions, the predetermined number being at least one, and receive, in response to one or more of the transmitted messages, one or more registration requests from the terminal device, each registration request corresponding to a respective transmitted message.

In an embodiment, the predetermined number is two and the at least one instructions, when executed by the at least one processor, cause the ad hoc base station to perform: transmit to the terminal device every other time a message of a first type, and every other time a message of a second type.

In an embodiment, the message of the first type is a broadcasted System Information Block 1, SIB1 and the message of the second type is one of a Radio Resource Control Reconfiguration message or a Radio Resource Control Connection Reconfiguration message.

In an embodiment, the predetermined number is one and the message is at least one the following: a broadcasted System Information Block 1, SIB1, a Radio Resource Control Reconfiguration message or a Radio Resource Control Connection Reconfiguration message

One or more examples of implementations are set forth in more detail in the accompanying drawings and the description of embodiments.

### LIST OF DRAWINGS

Some embodiments will now be described with reference to the accompanying drawings, in which
FIG. 1 illustrates an example of an operation environment of an ad hoc radio base station;
FIG. 2 illustrates an example of an ad hoc radio base station;
FIG. 3 illustrates an example;
FIGS. 4A and 4B are flow charts illustrating some embodiments;
FIGS. 5 and 6 illustrate embodiments applied in a 5G system,
FIGS. 7 and 8 illustrate embodiments applied in a 4G system,
FIG. 9 is a flow chart illustrating an embodiment, and
FIG. 10 is a signaling chart illustrating an embodiment.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Reference numbers, both in the description of the embodiments and in the claims, serve to illustrate the embodiments with reference to the drawings, without limiting it to these examples only.

The embodiments and features, if any, disclosed in the following description that do not fall under the scope of the independent claims are to be interpreted as examples useful for understanding various embodiments of the invention.

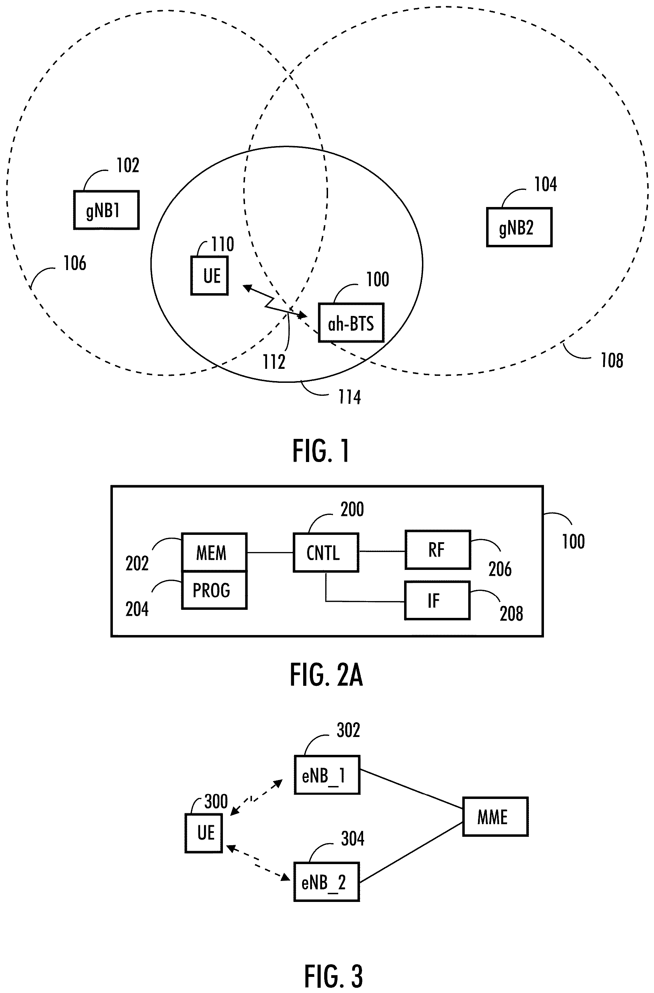

Let us study FIG. 1 and FIG. 2, which illustrate embodiments of an ad hoc radio base station 100 and an example of a typical operating environment.

FIG. 1 illustrates an example, where there are two base stations 102, 104 of a cellular communication system. The base station 102 serves a first cell 106 and the base station 104 serves a second cell 108. The example further shows an ad hoc base station 100, which is not a part of a cellular communication system but a standalone device. The ad hoc base station 100 is configured to set up an ad hoc cell 114 and set up a radio connection 112 with a terminal device 110 located in the ad hoc cell. Originally, the terminal device 110 may have been connected to base station 102 in the first cell, for example.

The ad hoc base station 100 may utilize methods known in the art when setting up the radio connection with the terminal device 110. For example, the ad hoc base station 100 may start transmitting system information with a higher transmission power so that in the terminal device the received power from ad hoc base station 100 is higher than the power received from base stations 102, 104. The system information may be, for example, System Information Block, SIB, comprising a Physical Cell ID, PCID and a Tracking Area Code TAC. Typically, terminal devices make a cell reselection to the base station offering the strongest signal level.

FIG. 2 illustrates an example of an apparatus configured to perform one or more embodiments. The apparatus may be an ad hoc base station 100.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus comprises a control circuitry or a chipset 200 configured to control at least part of the operation of the apparatus.

The apparatus may comprise a memory 202 for storing data. Furthermore, the memory may store software 204 executable by the control circuitry 200. The memory may be integrated in the control circuitry. The memory 202 may comprise one or more memory units.

The apparatus further comprises one or more transceivers 206 configured to connect the apparatus to terminal devices. An interface circuitry 208 may be one or more transceivers configured to communicate with other devices. The interface circuitry 208 may also be a user interface, or wireless or wired communication interface with which the apparatus may be connected to other devices for data transfer or other purposes.

In an embodiment, the software 206 may comprise a computer program comprising program code means adapted to cause the control circuitry 200 and transceiver 206 of the apparatus to realize at least some of the embodiments described below.

In an embodiment, the ad hoc base station is configured establish a communication with a target terminal device and maintain this communication and exchange packets with a target terminal device while the ad hoc base station performs measurements related to the target terminal device, for example to determine the location of the terminal device.

In an embodiment, the proposed solutions can be utilized in the context of 5G communications, but they can be applied in 4G as well, for example.

FIG. 3 illustrates an example of a 4G DF system. Prior solutions for 5G for performing measurements for DF solutions, for example, utilize a method of pushing the target terminal device 300 to lower technologies (e.g. 4G) where two cells served by base stations eNB_1 302 and eNB_2 304 are operating on adjacent frequencies and the target terminal device is switching between these two cells and is kept in Radio Resource Control, RRC, connection.

This kind of solution involving two cells requires coordination and resources making it complex and resource expensive. Further, the method cannot be applied directly in 5G and thus the terminal device needs to be pushed to lower a technology (such as 4G), which increases the risk of the unusual behavior of the terminal device to be discovered either by the terminal device itself (which may then be notified to the user) or the operator network (which could eventually raise a flag or block the terminal device).

Further, the prior art solution introduces uncertainty regarding that the terminal device will need to select another cell where to switch. Furthermore, due to the absence of established security, it is not possible to redirect the terminal device to a given other cell. As a result, there is no assurance that the terminal device will switch to a cell configured by the DF system. This opens the possibility that the terminal device, instead of alternating between the two DF-configured cells, may also eventually reconnect to the operator's original network-effectively resulting in the terminal device being lost from the ad cells point of view.

Another limitation of the prior art solution is the permanent nature of the use of a NAS reject cause code with a permanent status during the step where the terminal device is pushed to a lower access technology.

It may be noted, that in 5G systems a term "registration request" is used of a message. In 4G systems, corresponding message is denoted as "attach request" or "tracking area update request", depending on the context. However, for simplicity, in following the term "registration request" is used regardless of whether it is used 4G or 5G related system.

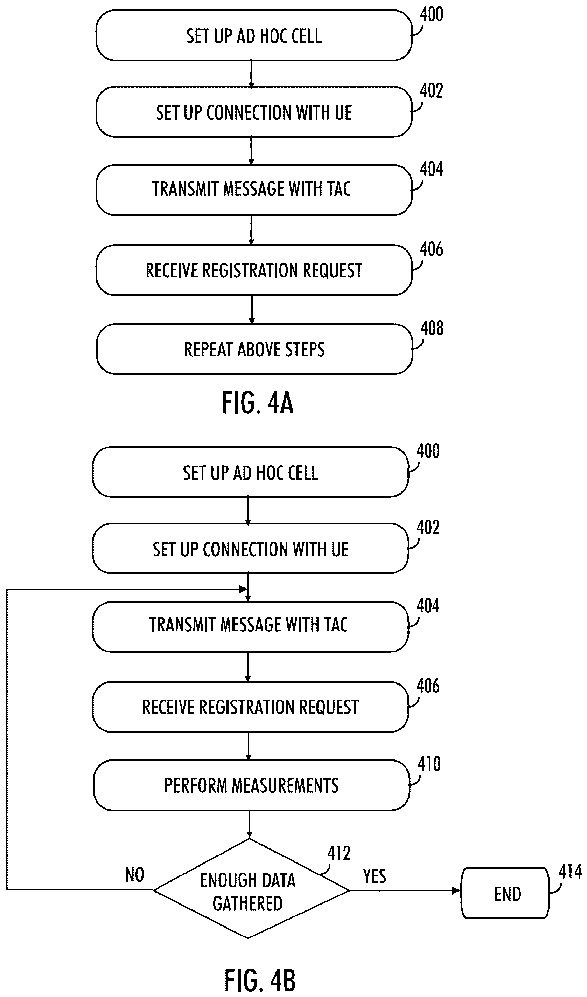

FIG. 4A is a flow chart illustrating an embodiment. The embodiment may be performed by an ad hoc base station, for example.

In step 400, the ad hoc base station sets up an ad hoc cell.

In step 402, the ad hoc base station is configured to set up a radio connection with a terminal device in the ad hoc cell. The ad hoc base station may utilize methods known in the art when setting up the radio connection with the terminal device. For example, the ad hoc base station may start transmitting system information with a higher transmission power so that in the terminal device the received power from ad hoc base station 100 is higher than the received power from the surrounding base stations of an operator's network.

In step 404, the ad hoc base station is configured to transmit to the terminal device a message comprising a tracking area code which is different to a tracking area code previously transmitted to the terminal device.

In step 406, the ad hoc base station is configured to receive a registration request from the terminal device.

In step 408, the ad hoc base station is configured to repeat the transmission and reception steps a given number of times, where the next transmission of the message with a tracking area code which different to a tracking area code previously transmitted is performed before a predetermined time has elapsed from the reception of the registration request to keep the terminal device connected and transmitting to the ad hoc base station.

FIG. 4B is another flow chart illustrating an embodiment. The embodiment may be performed by an ad hoc base station, for example.

The steps 400 to 406 are the same as in FIG. 4A, so they are not repeated here.

In step 410, the ad hoc base station is configured to perform measurements regarding the connection with the terminal device. The measurements may be various measurements regarding the properties of the connection or the location of the terminal device. For example, signal strength, signal to noise ratio and direction may be measured, among others.

In step 412, the ad hoc base station is configured to determine whether enough data has been gathered. The amount of data required may depend on the purpose the data is gathered. In an embodiment, data may be gathered to determine the direction or location where the terminal device is. In an embodiment, data may be gathered to monitor the terminal device.

If enough data has been gathered, the process ends in 414. If more data is required, the process continues in step 404, keeping the terminal device connected to the ad hoc base station.

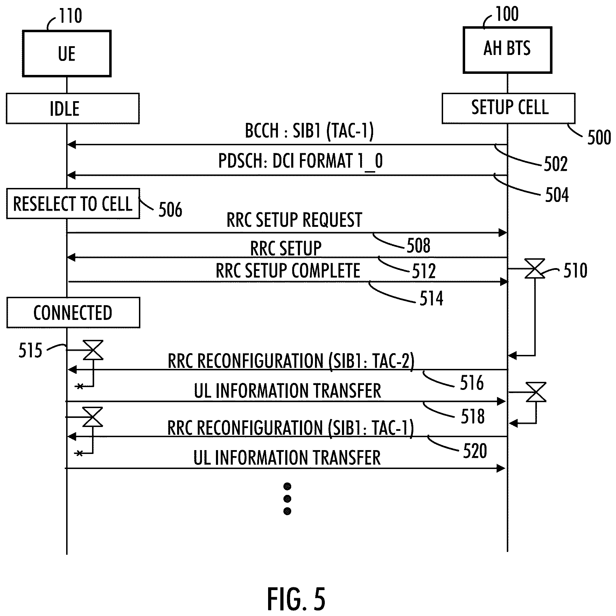

In an embodiment, when the embodiments are applied in a 5G system, the message which is transmitted in step 404 is a Radio Resource Control Reconfiguration message comprising a tracking area code. FIG. 5 illustrates an example of this embodiment.

The ad hoc base station 500 has set up an ad hoc cell. The ad hoc base station transmits 502 system information block SIB1 with tracking area code TAC-1 on broadcast control channel, BCCH. Then the ad hoc base station transmits 504 on physical data shared channel, PDSCH, downlink control information DCI Format 1_0, where Cyclic Redundancy Check is scrambled with System Information Radio Network Temporary Identifier, SI-RNTI.

The target terminal device 110 selects 506 the ad hoc cell.

As required by 5G specifications, the terminal device then transmits 508 an RRC set up request to the ad hoc base station.

At this point the ad hoc base station may be configured to initiate 510 a timer, which may be denoted as a Shadow T3510 Timer.

Further, the ad hoc base station responds to the setup request with a RRC set up message 512. The terminal device concludes the setup procedure by transmitting a RRC setup complete message 514. The ad hoc base station does not respond to this message.

The terminal device is now connected to the ad hoc base station. It initiates 515 a T3510 timer. If the timer T3510 expires it would trigger the terminal device to send another registration request.

However, when the Shadow T3510 Timer expires, the ad hoc base station transmits an RRC reconfiguration message 516 with system information block SIB1 with tracking area code TAC-2. Thus, the tracking area code is different than transmitted to the terminal device earlier. This cancels the T3510 Timer in the terminal device, which responds with UL information transfer message 518. The ad hoc base station does not respond to this message with registration accept or reject. Instead, the ad hoc base station, when receiving the UL information transfer message initiates again the Shadow T3510 Timer.

This process continues when the Shadow T3510 Timer again expires. Each time the ad hoc base station changes the tracking area code in the RRC reconfiguration message. In the next message 520 the TAC could be TAC-1 again, i.e., different from the previous value. It may also be a different value (TAC-3) as well. The terminal device stays connected to the ad hoc base station and packets are exchanged between the terminal device and the ad hoc base station. Thus, measurements can be made as long as required.

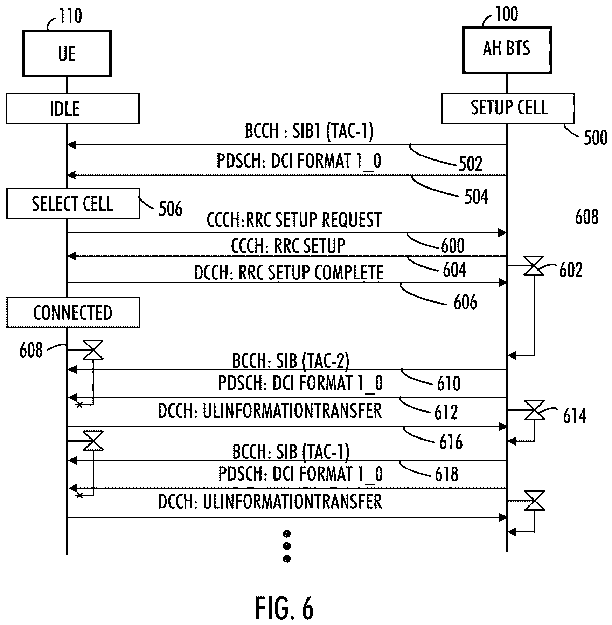

In an embodiment, when the embodiments are applied in a 5G system, the message which is transmitted in step 404 is a broadcasted System Information Block 1, SIB1, comprising the tracking area code. FIG. 6 illustrates an example of this embodiment. The broadcast method uses modification of broadcasted system information, specifically the SIB1 that carries information of the TAI of the cell.

The ad hoc base station 100 has set up 500 an ad hoc cell. The ad hoc base station transmits 502 system information block SIB1 with tracking area code TAC-1 on broadcast control channel, BCCH. Then the ad hoc base station transmits 504 on physical data shared channel, PDSCH, downlink control information DCI Format 1_0, where Cyclic Redundancy Check is scrambled with System Information Radio Network Temporary Identifier, SI-RNTI.

The target terminal device 110 selects 506 the ad hoc cell.

The terminal device then transmits 600 an RRC set up request to the ad hoc base station.

At this point the ad hoc base station may be configured to initiate 602 a timer, which may be denoted as a Shadow T3510 Timer.

Further, the ad hoc base station responds to the setup request with a RRC set up message 604. The terminal device concludes the setup procedure by transmitting a RRC setup complete message 606.

The terminal device is now connected to the ad hoc base station. It initiates 608 a T3510 timer. If the timer T3510 expires it would trigger the terminal device to send another registration request.

However, when the Shadow T3510 Timer expires, the ad hoc base station transmits on BCCH system information block SIB 1 610 with a new tracking area code TAC-2. Thus, the tracking area code is different than transmitted to the terminal device earlier. This is followed by the ad hoc base station transmitting to the terminal device an indication to the terminal device that System Information has changed. This indication may be a message 612 on Physical Data Shared Channel as DCI Format 1_0, where Cyclic Redundancy Check is scrambled with System Information Radio Network Temporary Identifier, SI-RNTI, as an identity which is used for broadcast of system information. This indication is detected by terminal devices, and they will refresh the System Information. This triggers also the ad hoc base station to initiate 614 again the Shadow T3510 Timer.

The message 612 triggers system information refresh procedure in the UE. The refreshing of the system information and detecting changed information compared to stored information causes the ongoing procedure to be aborted, the timer T3510 to be stopped and a new procedure to be triggered. The new procedure includes the terminal device starting timer T3510 and responding with uplink information transfer message 616 on dedicated control channel DCCH.

This process continues, each time the ad hoc base station changes the tracking area code in the broadcast message. In the next message 618 the TAC could be TAC-1 again (or a different value), i.e., different from the previous value. The terminal device stays connected to the ad hoc base station and packets are exchanged between the terminal device and the ad hoc base station. Thus, measurements can be made as long as required.

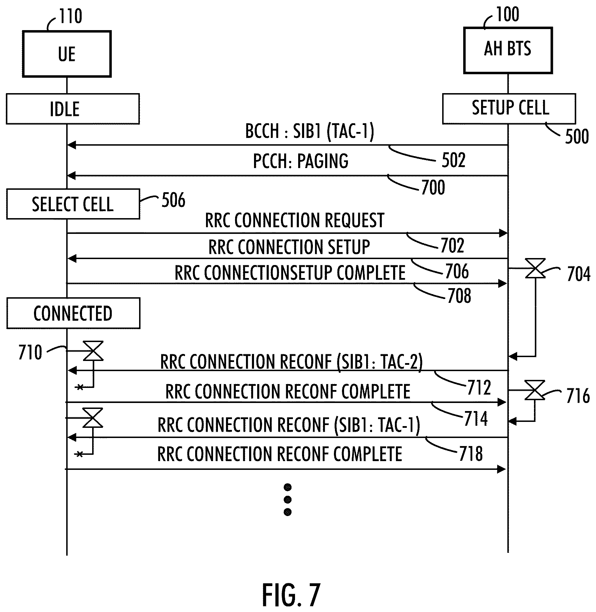

In an embodiment, when the embodiments are applied in a 4G system, the message which is transmitted in step 404 is a Radio Resource Control ConnectionReconfiguration message comprising a tracking area code. FIG. 7 illustrates an example of this embodiment. The procedure is mostly similar to that of 5G in FIG. 5, but there are differences in timer names, message names.

The ad hoc base station 500 has set up an ad hoc cell. The ad hoc base station transmits 502 system information block SIB1 with tracking area code TAC-1 on broadcast control channel, BCCH. In contrast to the 5G implementation, in 4G systems this indication may be a broadcast message 700 on Paging Control Channel PCCH with systemInfoModification flag set to true.

The target terminal device 110 selects 506 the ad hoc cell.

As required by 4G specifications, the terminal device then transmits 702 an RRC connection setup request to the ad hoc base station.

At this point the ad hoc base station may be configured to initiate 704 a timer, which may be denoted as a Shadow T3410 Timer.

Further, the ad hoc base station responds to the setup request with a RRC connection setup message 706. The terminal device concludes the setup procedure by transmitting an RRC connection setup complete message 708.

The terminal device is now connected to the ad hoc base station. It initiates 710 a T3410 timer. If the timer T3410 expires it would trigger the terminal device to send another registration request.

However, when the Shadow T3410 Timer expires, the ad hoc base station transmits an RRC connection reconfiguration message 712 with system information block SIB1 with tracking area code TAC-2. Thus, the tracking area code is different than transmitted to the terminal device earlier. This cancels the T3410 Timer in the terminal device, which responds with RRC connection reconfiguration complete message 714. The ad hoc base station, when receiving message initiates 716 again the Shadow T3410 Timer.

This process continues, each time the ad hoc base station changes the tracking area code in the RRC connection reconfiguration message. In the next message 718 the TAC could be TAC-1 again (or a different value), i.e., different from the previous value. The terminal device stays connected to the ad hoc base station and packets are exchanged between the terminal device and the ad hoc base station. Thus, measurements can be made as long as required.

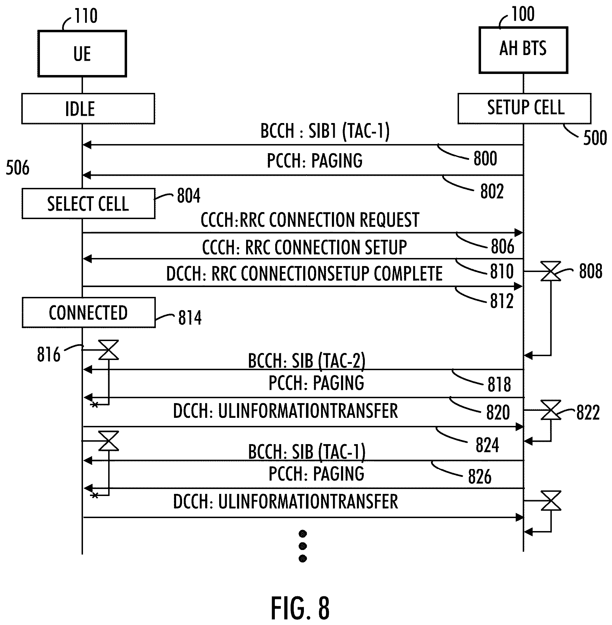

In an embodiment, when the embodiments are applied in a 4G system, the message which is transmitted in step 404 is a broadcasted System Information Block 1, SIB1, comprising the tracking area code. FIG. 8 illustrates an example of this embodiment.

The ad hoc base station 500 has set up an ad hoc cell. The ad hoc base station transmits 800 system information block SIB1 with tracking area code TAC-1 on broadcast control channel, BCCH. This is followed by the ad hoc base station transmitting to the terminal device an indication to the terminal device that System Information has changed. In contrast to the 5G implementation, in 4G systems this indication may be a broadcast message 802 on Paging Control Channel PCCH with systemInfoModification flag set to true.

The target terminal device 110 selects 804 the ad hoc cell.

The terminal device then transmits 806 an RRC set up request to the ad hoc base station.

At this point the ad hoc base station may be configured to initiate 808 a timer, which may be denoted as a Shadow T3410 Timer.

Further, the ad hoc base station responds to the setup request with an RRC set up message 810. The terminal device concludes the setup procedure by transmitting an RRC setup complete message 812.

The terminal device is now connected 814 to the ad hoc base station. It initiates 816 a T3410 timer. If the timer T3410 expires it would trigger the terminal device to send another registration request.

However, when the Shadow T3410 Timer expires, the ad hoc base station transmits on BCCH system information block SIB 1818 with a new tracking area code TAC-2. Thus, the tracking area code is different than transmitted to the terminal device earlier. This is followed by the ad hoc base station transmitting to the terminal device an indication to the terminal device that System Information has changed. This indication may be a broadcast message 820 on PCCH with systemInfoModification flag set to true. This indication is detected by terminal devices, and they will refresh the System Information. System information refresh function triggers the terminal to re-initiate the procedure that triggered RRC connection establishment. Related to the signaling 820, 824 also the ad hoc base station initiates 822 again the Shadow T3510 Timer.

The message 820 cancels the T3410 Timer in the terminal device, which responds with UL information transfer message 824 on dedicated control channel DCCH.

This process continues, each time the ad hoc base station changes the tracking area code in the broadcast message. In the next message 826 the TAC could be TAC-1 again (or a different value), i.e., different from the previous value. The terminal device stays connected to the ad hoc base station and packets are exchanged between the terminal device and the ad hoc base station. Thus, measurements can be made as long as required.

It may be noted that both the broadcasting embodiment and the RRC message embodiment described above take advantage of communication procedures that are as such a part of the communication standards and are normally used in mobility scenarios of terminal devices. However, here they are used in a different context to keep the terminal device connected to an ad hoc base station.

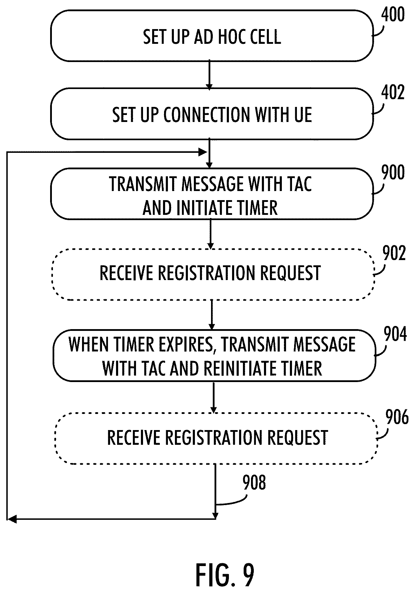

FIG. 9 is a flow chart illustrating an embodiment. The embodiment may be performed by an ad hoc base station, for example.

The steps 400 to 402 are the same as in FIG. 4A, so they are not repeated here.

In step 900, the ad hoc base station is configured to transmit to the terminal device a message, the message comprising a tracking area code and initiate a timer.

In step 902, the ad hoc base station may be configured to receive, as a response to the message, a registration request from the terminal device. In all cases, the terminal device does not transmit the registration request, but if it does the ad hoc base station is ready to receive it.

In step 904, the ad hoc base station is configured to, upon expiration of the timer, transmit to the terminal device a subsequent message comprising a tracking area code, and reinitiate the timer.

In step 906, the ad hoc base station may be configured to receive, as a response to the message, a registration request from the terminal device. In all cases, the terminal device does not transmit the registration request, but if it does the ad hoc base station is ready to receive it.

The ad hoc base station is configured to repeat 908 the transmissions upon each expiration of the timer to keep the terminal device connected to the ad hoc base station, wherein the tracking area code used in the transmitted messages changes after a predetermined number of consecutive transmissions, the predetermined number being at least one.

As mentioned, the ad hoc base station is configured to receive, in response to one or more of the transmitted messages, one or more registration requests from the terminal device, each registration request corresponding to a respective transmitted message.

In some examples, the predetermined number is two and the ad hoc base station is configured to transmit to the terminal device every other time a message of a first type, and every other time a message of a second type.

In some examples, the message of the first type is a broadcasted System Information Block 1, SIB1 and the message of the second type is one of a Radio Resource Control Reconfiguration message or a Radio Resource Control Connection Reconfiguration message.

In some examples, the predetermined number is one and the message is of one type, which may be at least one the following: a broadcasted System Information Block 1, SIB1, a Radio Resource Control Reconfiguration message or a Radio Resource Control Connection Reconfiguration message. This corresponds to the examples described above in connection with FIGS 4A to 8.

As mentioned above, after transmitting a broadcast message, the ad hoc base station may be configured to transmit to the terminal device an indication that System Information has changed. In some examples, the indication is transmitted on Physical Data Shared Channel as Downlink Control Information, where Cyclic Redundancy Check is scrambled with System Information Radio Network Temporary Identifier, SI-RNTI. In some examples, the indication is transmitted on Paging Control Channel PCCH as a broadcast message with systemInfoModification flag set to true.

Thus, when the predetermined number is two and the ad hoc base station is configured to transmit to the terminal device every other time a message of a first type, and every other time a message of a second type.

The TAC is kept the same in two successive messages, i.e., first is transmitted a message of the first type with TAC N, and then a message of the second type with the same TAC N. After that a message of the first type is transmitted with TAC N+X, and then a message of the second type with the same TAC N+X and so on.

If the terminal device transmits as a response to the message, a registration request, as typically is the case, the request is received.

As in the above examples of FIGS 4A and 4B, the ad hoc base station may be configured to perform measurements regarding the connection with the terminal device. The measurements may be various measurements regarding the properties of the connection or the location of the terminal device. For example, signal strength, signal to noise ratio and direction may be measured, among others.

In some examples, as in the above examples of FIGS 4A and 4B, the ad hoc base station may be configured to determine whether enough data has been gathered. The amount of data required may depend on the purpose the data is gathered. In an embodiment, data may be gathered to determine the direction or location where the terminal device is. In an embodiment, data may be gathered to monitor the terminal device.

In some examples, the message of the first type is a broadcasted System Information Block 1, SIB1 and the message of the second type is one of a Radio Resource Control Reconfiguration message or a Radio Resource Control Connection Reconfiguration message.

In some examples, the message of the first type is one of a Radio Resource Control Reconfiguration message or a Radio Resource Control Connection Reconfiguration message and the message of the second type is a broadcasted System Information Block 1, SIB1.

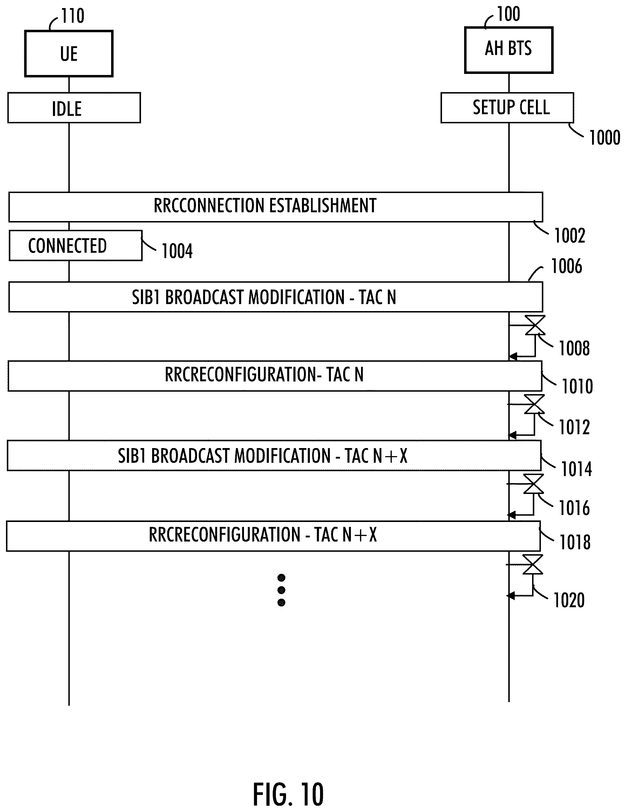

FIG. 10 is a signaling chart illustrating an embodiment, where the predetermined number is two and the ad hoc base station is configured to transmit to the terminal device every other time a message of a first type, and every other time a message of a second type. In this example, the message of the first type is a broadcasted System Information Block 1, SIB1 and the message of the second type is one of a Radio Resource Control Reconfiguration message.

The ad hoc base station 100 has set up 1000 an ad hoc cell. The terminal device 110 may be idle at this point. The ad hoc base station performs RRC Connection establishment 1002 with the terminal device 110. The terminal device is now connected 1004 to the ad hoc base station 100.

The ad hoc base station then performs SIB1 broadcast modification procedure 1006 with tracking area code TAC N, as described above. It also initiates a timer 1008.

When the timer expires, the ad hoc base station then RRC reconfiguration procedure 1010 with the same tracking area code TAC N, as described above. It also initiates a timer 1012.

The above procedures are then repeated 1014, 1016 with a different TAC N+X, and separated by timer 1016.

This interleaved process of transmitting first a message of one type and then a message of another type, two successive messages having the same TAC, followed by similar successive messages with another TAC, is repeated as long as necessary. The ad hoc base station is configured to receive registration requests as a response to the procedures, perform measurements and gather data. When suitable amount of data has been gathered, performing the procedures may cease.

In an embodiment, the length of the timers after each procedure is the same. In another embodiment, the timers have different lengths.

As in the embodiments described in connection with FIGS 4A to 8, the ad hoc base station may and 4B, receive from the terminal device, as a response to a message, a registration request. Likewise, in some examples the ad hoc base station may be configured to perform measurements regarding the connection with the terminal device. The measurements may be various measurements regarding the properties of the connection or the location of the terminal device. For example, signal strength, signal to noise ratio and direction may be measured, among others. In some examples, the ad hoc base station is configured to determine whether enough data has been gathered. The amount of data required may depend on the purpose the data is gathered. In an embodiment, data may be gathered to determine the direction or location where the terminal device is. In an embodiment, data may be gathered to monitor the terminal device.

It may further be noted that changing the broadcasted SIB1 is normally rare in live networks as TAC value can be considered static for a cell. In the broadcasting embodiments of FIGS. 6 and 8, the TAC changes are scheduled dynamically, which is not performed in operator-controlled networks. In the RRC message embodiments of FIGS. 5 and 7, part of the procedure is utilized for triggering the mobility management procedure. Methods of both described embodiments methods run in loop to keep the terminal device active for enabling performing measurements for DF purposes, for example.

Even though the invention has been described with reference to one or more embodiments according to the accompanying drawings, it is clear that the invention is not restricted thereto but can be modified in several ways within the scope of the appended claims. All words and expressions should be interpreted broadly, and they are intended to illustrate, not to restrict, the embodiments. It will be obvious to a person skilled in the art that, as technology advances, the inventive concept can be implemented in various ways.

## Claims

1. An ad hoc base station (100) comprising at least one processor (200), and at least one memory (202) storing instructions that, when executed by the at least one processor, cause the ad hoc radio base station at least to:
set up (400) an ad hoc cell;
setup (402) a radio connection with a terminal device in the ad hoc cell;
transmit (900) to the terminal device a message, the message comprising a tracking area code, and initiate a timer;
upon expiration of the timer, transmit (904) to the terminal device a subsequent message comprising a tracking area code, and reinitiate the timer;
repeat the transmission upon each expiration of the timer to keep the terminal device connected and transmitting to the ad hoc base station,
wherein the tracking area code used in the transmitted messages changes after a predetermined number of consecutive transmissions, the predetermined number being at least one, and
receive (902, 906), in response to one or more of the transmitted messages, one or more registration requests from the terminal device, each registration request corresponding to a respective transmitted message.

2. The ad hoc base station of claim 1, wherein
the predetermined number is two and the at least one the instructions, when executed by the at least one processor, cause the ad hoc base station to perform:
transmit to the terminal device every other time a message of a first type, and every other time a message of a second type.

3. The ad hoc base station of claim 2, wherein the message of the first type is a broadcasted System Information Block 1, SIB1 and the message of the second type is one of a Radio Resource Control Reconfiguration message or a Radio Resource Control Connection Reconfiguration message.

4. The ad hoc base station of claim 1, wherein predetermined number is one and the message is at least one the following: a broadcasted System Information Block 1, SIB1, a Radio Resource Control Reconfiguration message or a Radio Resource Control Connection Reconfiguration message.

5. The ad hoc base station of claim 3 or 4, wherein the instructions, when executed by the at least one processor, cause the ad hoc base station to perform:
after transmitting a broadcast message, transmit to the terminal device an indication that System Information has changed.

6. The ad hoc base station of claim 5, wherein the instructions, when executed by the at least one processor, cause the ad hoc base station to perform:
transmit the indication on Physical Data Shared Channel as Downlink Control Information, where Cyclic Redundancy Check is scrambled with System Information Radio Network Temporary Identifier, SI-RNTI.

7. The ad hoc base station of claim 5, wherein the instructions, when executed by the at least one processor, cause the ad hoc base station to perform:
transmit the indication on Paging Control Channel PCCH as a broadcast message with systemInfoModification flag set to true.

8. The ad hoc base station of claim 1, wherein the instructions, when executed by the at least one processor, cause the ad hoc base station to perform:
on the basis of radio connection with the terminal device, gather data for performing direction finding regarding the terminal device.

9. A method for an ad hoc base station comprising:
setting up (400) an ad hoc cell;
setting up (402) a radio connection with a terminal device in the ad hoc cell;
transmitting (900) to the terminal device a message, the message comprising a tracking area code, and initiating a timer;
upon expiration of the timer, transmitting (904) to the terminal device a subsequent message comprising a tracking area code, and reinitiating the timer;
repeating the transmission upon each expiration of the timer to keep the terminal device connected and transmitting to the ad hoc base station,
wherein the tracking area code used in the transmitted messages changes after a predetermined number of consecutive transmissions, the predetermined number being at least one, and
receive (902, 906), in response to one or more of the transmitted messages, one or more registration requests from the terminal device, each registration request corresponding to a respective transmitted message.

10. The method of claim 9, wherein the predetermined number is two, the method further comprising: transmitting to the terminal device every other time a message of a first type, and every other time a message of a second type.

11. The method of claim 10, wherein the message of the first type is a broadcasted System Information Block 1, SIB1 and the message of the second type is one of a Radio Resource Control Reconfiguration message or a Radio Resource Control Connection Reconfiguration message.

12. The method of claim 9, wherein predetermined number is one and the message is at least one the following: a broadcasted System Information Block 1, SIB1, a Radio Resource Control Reconfiguration message or a Radio Resource Control Connection Reconfiguration message.
transmitting to the terminal device every other time a message of a first type, and every other time a message of a second type.

13. The method of claim 9, further comprising:
gathering data, on the basis of radio connection with the terminal device, for performing direction finding regarding the terminal device; and
repeating the transmission and reception steps until enough data for direction finding regarding the terminal device has been obtained.

14. A computer-readable medium comprising computer program code, which, when executed by one or more microprocessors, causes an ad hoc base station to perform:
setting up an ad hoc cell;
setting up a radio connection with a terminal device in the ad hoc cell;
transmitting to the terminal device a message, the message comprising a tracking area code and initiating a timer;
upon expiration of the timer, transmitting to the terminal device a subsequent message comprising a tracking area code, and reinitiating the timer;
repeating the transmission upon each expiration of the timer to keep the terminal device connected and transmitting to the ad hoc base station,
wherein the tracking area code used in the transmitted messages changes after a predetermined number of consecutive transmissions, the predetermined number being at least one, and
receive, in response to one or more of the transmitted messages, one or more registration requests from the terminal device, each registration request corresponding to a respective transmitted message.
